# EUROPÄISCHE PATENTANMELDUNG

(11) **EP 4 699 831 A1**
(43) Veröffentlichungstag der Anmeldung: **25.02.2026**
(21) Anmeldenummer: 25195021.8
(22) Anmeldetag: 10.08.2025
(51) Int. Cl.: B60G 17/056

(54) **HYDRAULISCHE HÖHENVERSTELLUNG EINES KRAFTFAHRZEUGS SOWIE KRAFTFAHRZEUG**

(30) Priorität: 23.08.2024 DE 102024124241
(71) Anmelder: Vibracoustic SE, 69469 Weinheim (DE)
(72) Erfinder: Vogt, Dennis, 21339 Lüneburg (DE)
(74) Vertreter: Patentanwälte Olbricht Buchhold Keulertz

(57) **Zusammenfassung**

Beschrieben wird eine hydraulische Höhenverstellung eines Kraftfahrzeugs, mit wenigstens einer hydraulischen Pumpenanordnung, die über einen Zulaufzweig mit wenigstens zwei Aktuatoren zur Verstellung eines Fahrzeugniveaus des Kraftfahrzeugs verbunden ist, indem mittels der Pumpenanordnung ein Hydraulikflüssigkeit von wenigstens einer Tankanordnung in wenigstens einen der wenigstens zwei Aktuatoren pumpbar ist, wobei den Aktuatoren jeweils wenigstens ein Schaltventil vorgeschaltet ist, um einen Zufluss oder Abfluss von Hydraulikflüssigkeit zuzulassen oder zu unterbinden, wobei die wenigstens zwei Aktuatoren über einen Rücklaufzweig mit der wenigstens einen Tankanordnung verbunden sind, wobei ein pilotdruckgesteuertes Rücklaufventil vorgesehen ist, das derart ausgebildet ist, dass es unterhalb eines definierten Schaltpilotdrucks den Rücklaufzweig offen hält, wobei das Rücklaufventil bei und oberhalb des Schaltpilotdrucks den Rücklaufzweig verschlossen hält, wobei zwischen Pumpenanordnung und Rücklaufventil eine Pilotdruckleitung vorgesehen ist, über die ein Pilotdruck bereitstellbar ist.

## Beschreibung

Beschrieben werden eine hydraulische Höhenverstellung eines Kraftfahrzeugs sowie ein Kraftfahrzeug.

Hydraulische Höhenverstellungen von Kraftfahrzeugen sowie Kraftfahrzeuge der eingangs genannten Art sind im Stand der Technik bekannt.

Bekannte pneumatische Höhenverstellungen weisen ein elektronisch ansteuerbares Rücklaufventil in einem Rücklaufzweig auf. Dabei wird beim Anheben bzw. Aufpumpen ein elektrisches Schaltventil, das einem Federbein zugeordnet ist, geöffnet, während das elektrisch ansteuerbare Rückflussventil geschlossen ist. Soll nun Luft bzw. Druck aus der Luftfeder abgelassen werden, werden das elektronische Rückflussventil und das der jeweiligen Luftfeder zugeordnete elektrische Schaltventil geöffnet, bis der gewünschte Höhenstand erreicht wird. Dieses Prinzip ist auch bei hydraulischen Lösungen anwendbar.

Elektronische Schaltventile sind verhältnismäßig teuer. Dabei steigt der Preis insbesondere mit der Größe des Schaltventils, welche wiederum von der maximalen Durchflussmenge maßgeblich mitbestimmt wird. Bei einer reinen Hinterachslösung muss das Ventil folglich ausreichend groß dimensioniert sein, um die Durchflussmenge von zwei Luftfedern gleichzeitig zu realisieren; werden hingegen Vorder- und Hinterachse mit Luftfedern versehen, so ist eine doppelt so große Rückführungsleitung und damit auch ein entsprechend großes Rücklaufventil notwendig, um die gleiche Absenkgeschwindigkeit zu erreichen.

Die KR 10 2024 009 3011 A schlägt vor, den Zulauf zu den hydraulischen Aktuatoren gar nicht zu schalten, sodass alle Aktuatoren gleichzeitig druckbeaufschlagt werden, und stattdessen Schaltventile auf der Druckablassseite zu platzieren.

Nachteilig ist hierbei, dass über den Druckzulauf immer alle Aktuatoren gleichmäßig so lange angehoben werden müssen, bis der letzte der Aktuatoren die Sollhöhe erreicht hat. Anschließend werden die anderen Aktuatoren, welche nun prinzipbedingt ein zu hohes Niveau haben, wieder auf das Sollniveau abgelassen. Dieses Prinzip spart zwar ein Schaltventil ein, spätestens aber bei einer Lösung für vier Aktuatoren, bzw. Aktuatoren an der Vorder- und Hinterachse kommt es regelmäßig vor, dass drei Aktuatoren zunächst mit Fluid überfüllt werden müssen, bis der letzte auf Sollniveau ist. Im Anschluss müssen dann die ersten drei Aktuatoren wieder abgelassen werden, was den Komfort mindert, die Einstellung des gewünschten Niveaus verlangsamt und unnötig Energie verschwendet. Ferner müssen aufgrund unterschiedlicher Länge der Zuläufe zu den Vorder- und Hinterachsaktuatoren die Druckverluste in den Leitungen ausgeglichen werden, da sonst die Aktuatoren mit den geringeren Druckverlusten prinzipbedingt immer zunächst überfüllt werden, bevor die anderen Aktuatoren sich bewegen.

Somit stellt sich die Aufgabe, hydraulische Höhenverstellungen von Kraftfahrzeugen sowie Kraftfahrzeuge der eingangs genannten Art dahingehend weiterzubilden, dass ein elektronisch geschaltetes Ventil eingespart werden kann, dennoch aber gleichermaßen reine Hinterachswie auch Mehrachssysteme bedienen zu können.

Die Aufgabe wird gelöst durch eine hydraulische Höhenverstellung eines Kraftfahrzeugs gemäß Anspruch 1 sowie ein Kraftfahrzeug gemäß dem nebengeordneten Anspruch 12. Weiterführende Ausgestaltungen und Weiterbildungen sind Gegenstand der abhängigen Ansprüche.

Beschrieben wird eine hydraulische Höhenverstellung eines Kraftfahrzeugs, mit wenigstens einer hydraulischen Pumpenanordnung, die über einen Zulaufzweig mit wenigstens zwei Aktuatoren zur Verstellung eines Fahrzeugniveaus des Kraftfahrzeugs verbunden ist, indem mittels der Pumpenanordnung eine Hydraulikflüssigkeit von wenigstens einer Tankanordnung in wenigstens einen der wenigstens zwei Aktuatoren pumpbar ist, wobei den Aktuatoren jeweils wenigstens ein Schaltventil vorgeschaltet ist, um einen Zufluss oder Abfluss von Hydraulikflüssigkeit zuzulassen oder zu unterbinden, wobei die wenigstens zwei Aktuatoren über einen Rücklaufzweig mit der wenigstens einen Tankanordnung verbunden sind, wobei ein pilotdruckgesteuertes Rücklaufventil vorgesehen ist, das derart ausgebildet ist, dass es unterhalb eines definierten Schaltpilotdrucks den Rücklaufzweig offen hält, wobei das Rücklaufventil bei oder oberhalb des Schaltpilotdrucks den Rücklaufzweig verschlossen hält, wobei zwischen Pumpenanordnung und Rücklaufventil eine Pilotdruckleitung vorgesehen ist, über die ein Pilotdruck bereitstellbar ist.

Das pilotdruckgesteuerte Rücklaufventil ist dazu eingerichtet, den Rücklaufzweig bedarfsweise zu öffnen oder zu schließen. Zum Öffnen oder Schließen wird der Druck der Pilotdruckleitung verwendet, wobei das Rücklaufventil bei einem Pilotdruck unterhalb des Schaltpilotdrucks geöffnet ist und bei oder oberhalb des Schaltpilotdrucks schließt.

Durch die Verwendung eines pilotdruckgesteuerten Rücklaufventils ist es möglich, den Einsatz eines weiteren teuren elektronischen Schaltventils zu vermeiden, insbesondere eines solchen, das ein großes Durchflussvolumen an Hydraulikflüssigkeit haben muss, wie es zum Beispiel bei einer Mehrachslösung erforderlich ist.

Auf diese Weise ist es möglich, die hydraulische Höhenverstellung sowohl für Kraftfahrzeuge mit einer hydraulisch höhenverstellbaren Hinterachse oder mit mehreren hydraulisch höhenverstellbaren Achsen auszustatten, wobei bestimmte Bauteile gegebenenfalls mit der Anzahl der höhenverstellbaren Achsen skaliert werden müssen, das pilotdruckgesteuerte Rücklaufventil jedoch günstiger dimensionierbar ist als entsprechende elektronisch schaltenden Ventile. Dieses gilt insbesondere, da bei pilotdruckgesteuerten Schaltventilen die notwendigen Schaltkräfte nicht notwendigerweise mit dem zu schaltenden Querschnitt korrelieren.

Der entsprechende Pilotdruck kann von der Pumpenanordnung oder von einer separaten druckerzeugenden Anordnung bereitgestellt werden, die ausschließlich zur Betätigung des pilotdruckgesteuerten Rücklaufventils dient oder gegebenenfalls auch zu anderen Zwecken verwendet werden kann.

Die Tankanordnung kann ein einzelner Tank, eine Mehrzahl von Tanks oder ein einzelner oder eine Mehrzahl von Tanks mit gegebenenfalls vorgesehenen Zusatztanks sein, z. B.

Ausgleichsbehälter. Ausgleichsbehälter können Schwankungen im Volumen der Hydraulikflüssigkeit ausgleichen, die zum Beispiel durch Temperaturänderungen oder den Betrieb des Fahrzeugs entstehen.

Die Pumpenanordnung kann einen Motor und eine Hydraulikpumpe aufweisen. Die Pumpenanordnung ist dazu eingerichtet, die Hydraulikflüssigkeit unter ausreichend hohem Druck zu den wenigstens zwei Aktuatoren zu befördern.

In einer ersten weiterführenden Ausgestaltung ist vorgesehen, dass ein Druckpuffer vorgesehen ist, der Druckspitzen bei Druckveränderungen im Zulaufzweig des hydraulischen Systems reduziert.

In einer weiteren weiterführenden Ausgestaltung ist vorgesehen, dass den wenigstens zwei Aktuatoren im Zulaufzweig ein Vordruckventil vorgeschaltet ist, das erst oberhalb eines Mindestdrucks einen Fluidfluss zu den wenigstens zwei Aktuatoren freigibt, wobei die Pilotdruckleitung zwischen Pumpenanordnung und Vordruckventil einerseits und dem Rücklaufventil andererseits angeordnet ist.

Auf diese Weise kann zwischen Pumpenanordnung und Vordruckventil ein Druck in der Hydraulikflüssigkeit aufgebaut werden.

Das Vordruckventil kann ein federbelastetes Ventil sein, wobei verschiedene Federarten wie zum Beispiel Spiral- oder Tellerfedern in Frage kommen, die sowohl Zugfedern als auch Druckfedern in entsprechender Anordnung sein können. In bestimmten Ausgestaltungen kann die Federkraft einstellbar sein, beispielsweise durch Einstellen einer Vorspannung der Feder.

In einer weiteren weiterführenden Ausgestaltung ist vorgesehen, dass ein Bypass zum Druckabbau in der Pilotdruckleitung nach Abschalten der wenigstens einen Pumpenanordnung vorgesehen ist.

Dies dient dazu, dass zwischen Pumpenanordnung und pilotdruckgesteuertem Rücklaufventil der Leitungsdruck im Laufe der Zeit abgebaut wird, sodass das pilotdruckgesteuerte Rücklaufventil wieder öffnet.

In einer weiteren weiterführenden Ausgestaltung ist vorgesehen, dass der Bypass im Rücklaufventil ausgebildet ist und eine Fluidverbindung zwischen Pilotdruckleitung und Rücklaufzweig herstellt.

Auf diese Weise kann auf einen separaten Bypass verzichtet werden.

In einer weiteren weiterführenden Ausgestaltung ist vorgesehen, dass Bypass als Nut oder Bohrung im Ventilkörper ausgebildet ist.

Dies spart zusätzliche Bauteile und/oder Fertigungsschritte.

Der Bypass kann in bestimmten Ausführungsformen auch im Ventilgehäuse oder im Ventilsitz oder dergleichen ausgebildet sein.

In einer weiteren weiterführenden Ausgestaltung ist vorgesehen, dass der Bypass im Zulaufzweig zwischen der Pumpenanordnung und dem Vordruckventil einerseits und dem Rücklaufzweig zwischen dem Rückflussventil und der Tankanordnung andererseits eine Fluidverbindung herstellt.

In einer weiteren weiterführenden Ausgestaltung ist vorgesehen, dass das Rücklaufventil einen mit einer Feder belasteten Ventilkörper aufweist, der durch die Feder in einer Offenstellung gehalten wird, wobei der Ventilkörper durch den Schaltdruck in eine Geschlossenstellung gebracht wird.

Dabei kommen verschiedene Federarten wie zum Beispiel Spiralfedern in Frage, die sowohl Zugfedern als auch Druckfedern in entsprechender Anordnung sein können. In bestimmten Ausgestaltungen kann die Federkraft einstellbar sein, beispielsweise durch Einstellen einer Vorspannung der Feder.

In einer weiteren weiterführenden Ausgestaltung ist vorgesehen, dass der Ventilkörper eine Ventilkugel, ein Ventilstößel oder ein Ventilzylinder ist.

In einer weiteren weiterführenden Ausgestaltung ist vorgesehen, dass zwischen Pumpenanordnung und Rücklaufzweig eine durch ein Überdruckventil im Normalbetrieb gesperrte Überdruckleitung vorgesehen ist.

In einer weiteren weiterführenden Ausgestaltung ist vorgesehen, dass die mindestens zwei Aktuatoren jeweils mindestens eine Fluidkammer enthalten, welche von jeweils mindestens einem Elastomerbalg mit einer Rollfalte zumindest abschnittsweise begrenzt wird, wobei das hydraulische System so konfiguriert ist, dass der gesamte Fluidstrom an Hydraulikflüssigkeit beim Einfahren einer oder mehrerer der wenigstens zwei Aktuatoren gemeinsam durch das eine Rücklaufventil in den Rücklaufzweig strömt.

Gegenüber anderen Systemen werden bei Balgsystemen tendenziell hohe Volumenströme bei niedrigen Drücken benötigt, während beispielsweise bei kolbenbasierten Konstruktionen die Drücke tendenziell höher sind, dafür aber die Volumenströme geringer. Hier ist der Einsatz eines pilotdruckgesteuerten Ventils besonders vorteilhaft, da hier die zu schaltenden Volumenströme und die notwendigen Schaltkräfte nicht notwendigerweise gekoppelt sind. Dies liegt daran, dass die Schaltkräfte in der Regel nicht in, sondern quer zur Zuhaltekraft gerichtet sind, so dass sie unabhängig von der Zuhaltekraft sind. Bei elektronisch geschalteten Ventilen sind die Zuhaltekräfte jedoch meist in Richtung der Schaltkräfte angeordnet, so ass große zu schaltende Querschnitte in großen Schaltkräften resultieren und in Folge auch große, teure Komponenten, wie große Kupferspulen, notwendig sind.

Ein erster unabhängiger Gegenstand betrifft ein Kraftfahrzeug mit einer hydraulischen Höhenverstellung nach einem der vorangegangenen Ansprüche der zuvor beschriebenen Art.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen schematisch:
- Fig. 1: eine Draufsicht auf ein Kraftfahrzeug mit einer hydraulischen Höhenverstellung;
- Fig. 2: ein Schaltbild einer hydraulischen Höhenverstellung für ein Einachssystem;
- Fig. 3: ein Schaltbild der hydraulischen Höhenverstellung aus Fig. 1 für ein Zweiachssystem;
- Fig. 4: ein pilotdruckgesteuertes Rücklaufventil in einer ersten Ausführungsform, sowie
- Fig. 5: ein pilotdruckgesteuertes Rücklaufventil in einer zweiten Ausführungsform.

In den nachfolgend beschriebenen Ausführungsbeispielen werden gleiche oder gleichwirkende Bauteile oder Elemente zur besseren Lesbarkeit mit denselben Bezugszeichen versehen.

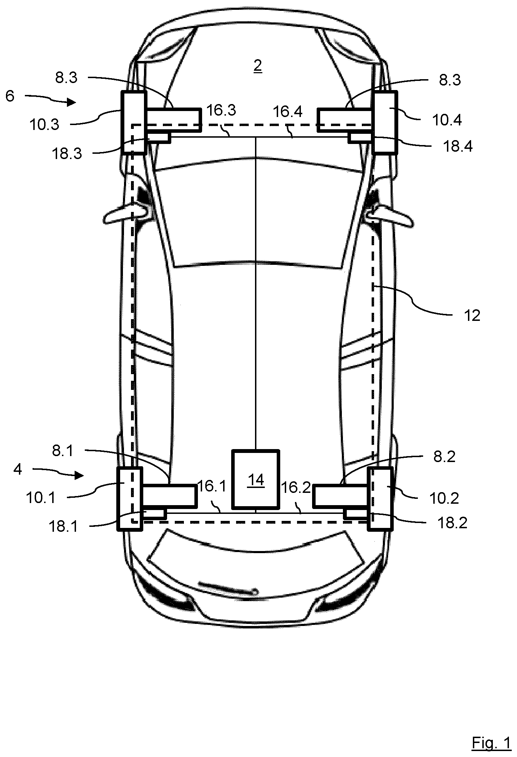

Fig. 1 zeigt eine Draufsicht auf ein Kraftfahrzeug 2.

Das Kraftfahrzeug 2 weist eine Hinterachse 4 und eine Vorderachse 6 auf. Das Kraftfahrzeug 2 weist ein Fahrwerk mit Fahrwerksanordnungen 8.1, 8.2, 8.3, 8.4 auf, wobei die Fahrwerksanordnung 8.1 für ein linkes Hinterrad 10.1, die Fahrwerksanordnung 8.2 für ein rechtes Hinterrad 10.2, die Fahrwerksanordnung 8.3 für ein linkes Vorderrad 10.3 und die Fahrwerksanordnung 8.4 für ein rechtes Vorderrad 10.4 vorgesehen sind. Die jeweiligen Fahrwerksanordnungen 8.1, 8.2, 8.3 und 8.4 sind höhenverstellbar mithilfe einer hydraulischen Höhenverstellung 12.

Die hydraulische Höhenverstellung 12 weist eine Steueranordnung 14 auf, die sowohl die Steuerlogik als auch die notwendigen Fluidförderkomponenten aufweist. Die Steueranordnung 14 kann in verschiedenen Ausführungsformen in einem oder in mehreren Gehäusen angeordnet sein. Die Steueranordnung 14 ist mittels Zuleitungen 16.1, 16.2, 16.3 und 16.4 mit Aktuatoren 18.1, 18.2, 18.3 und 18.4 verbunden, die jeweils an den Fahrwerksanordnungen 8.1, 8.2, 8.3 und 8.4 angeordnet oder Bestandteile derselben sind.

Die Komponenten der Höhenverstellung 12 und insbesondere der Steueranordnung 14 sind in den nachfolgenden Figurenbeschreibungen eingehender erläutert. Mit Hilfe der hydraulischen Höhenverstellung 12 kann das Fahrzeugniveau des Kraftfahrzeugs 2 individuell an jedem einzelnen Rad 10.1 bis 10.4 angehoben oder abgesenkt werden, um das Niveau an einer oder beiden der Achsen 4, 6 anzuheben oder zu senken oder ggf. an einzelnen der Räder 10.1 bis 10.4 auszugleichen, beispielsweise bei beladungsbedingt oder durch die Passagierverteilung bedingten unterschiedlichen Belastungen.

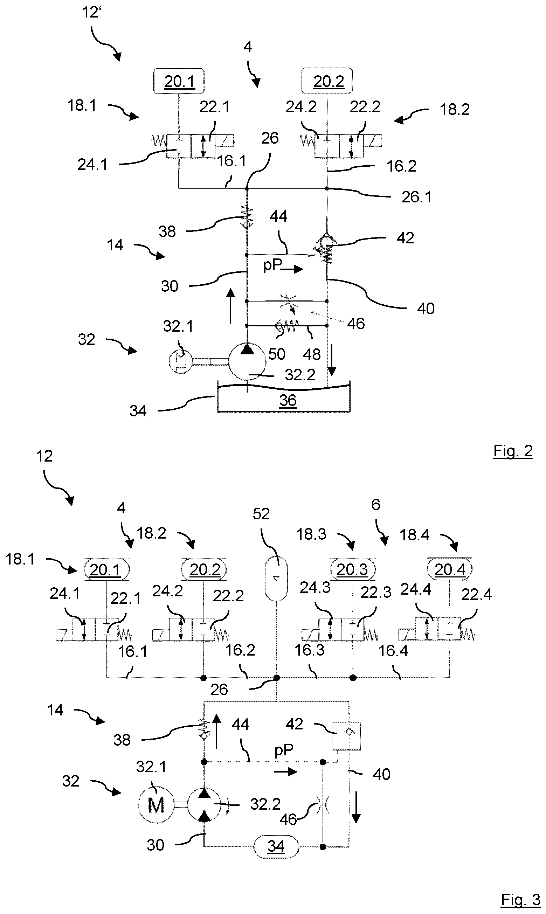

Fig. 2 zeigt ein Schaltbild einer hydraulischen Höhenverstellung 12' für ein Einachssystem, üblicherweise für eine Hinterachse 4 eines Kraftfahrzeugs.

Die Aktuatoren 18.1 und 18.2 weisen jeweils Fluidkammern 20.1 und 20.2 auf, die mit Hydraulikflüssigkeit gefüllt werden können und aus denen Hydraulikflüssigkeit abgelassen werden kann. Beim Befüllen mit Hydraulikflüssigkeit erhöht sich das Volumen der Fluidkammern 20.1, 20.2 entsprechend, wodurch die entsprechende Fahrwerksanordnung 8.1, 8.2 angehoben wird.

Zum Steuern der Befüllung der Fluidkammern 20.1 und 20.2 sind jeweils Magnetventile 22.1 und 22.2 vorgesehen, die auf der Basis von Daten eines jeweiligen Niveausensors 24.1 und 24.2 geöffnet oder geschlossen werden. Der jeweilige Niveausensor 24.1 und 24.2 sendet seine Daten an eine zentrale, nicht dargestellte Steuerung, die für jedes entsprechend ausgestattete Rad 10.1, 10.2 entscheidet, ob dies angehoben oder abgesenkt werden soll. Dies kann unter anderem automatisch geregelt werden und/oder durch Benutzervorgaben beeinflusst werden.

Über einen Verteiler 26 sind die Aktuatoren 18.1 und 18.2 mit einem Zulaufzweig 30 mittels der Leitungen 16.1 und 16.2 fluidleitend verbunden, der mithilfe einer Pumpenanordnung 32 aus einem Tank 34 Hydraulikflüssigkeit 36 in Richtung der Aktuatoren 18.1 und 18.2 pumpen kann.

Die Pumpenanordnung 32 weist einen Motor 32.1 und eine Pumpe 32.2 auf, die einen hydraulischen Druck mit der Hydraulikflüssigkeit 36 erzeugen können, wodurch es möglich ist, die jeweiligen Fluidkammern 20.1 und 20.2 im Falle eines notwendigen Anhebens des Niveaus an der Achse 4 zu befüllen.

In dem Zulaufzweig 30 ist des Weiteren ein Vordruckventil 38 angeordnet, das den Zulaufzweig 30 so lange geschlossen hält, bis ein gewisser Mindestdruck bzw. Schaltdruck erreicht ist, bei dem das Vordruckventil 38 öffnet. Unterhalb dieses Mindestdrucks ist keine Beförderung von Hydraulikflüssigkeit 36 zu den Aktuatoren 18.1, 18.2 bzw. in die Fluidkammern 20.1 und 20.2 möglich.

Aktuator 18.1 und 18.2 sind desweiteren über die Leitungen 16.1, 16.2 mit einem Rücklaufzweig 40 verbunden, über den die Hydraulikflüssigkeit 36 zurück in den Tank 34 geleitet werden kann.

In dem Rücklaufzweig 40 ist ein pilotdruckgesteuertes Rücklaufventil 42 angeordnet, das im Nachgang genauer beschrieben wird. Soll das Niveau der entsprechenden höhenverstellbaren Hinterachse 4 oder eines Rades 10.1, 10.2 davon abgesenkt werden, werden die entsprechenden Magnetventile 22.1 und/oder 22.2 geöffnet, wobei bei geöffnetem Rücklaufventil 42 durch die Gewichtskraft des Kraftfahrzeugs die Hydraulikflüssigkeit 36 durch den Rücklaufzweig 40 in den Tank 34 gedrückt wird.

Der Tank 34 kann ein einzelner Tank sein oder es kann ein mehrteiliger Tank sein, der einen Ausgleichsbehälter aufweist.

Zulaufzweig 30 und Rücklaufzweig 40 gehen am Verteiler 26 bzw. 26.1 ineinander über. In bestimmten Ausführungsformen können die Verteiler 26 und 26.1 in einem Bauteil zusammen gefasst werden oder, so wie hier dargestellt, an zwei Verteilerpunkten, wobei der Leitungsabschnitt zwischen den Kreuzungen 26 und 26.1 je nach Betriebsmodus als Zulauf oder als Rücklauf dient.

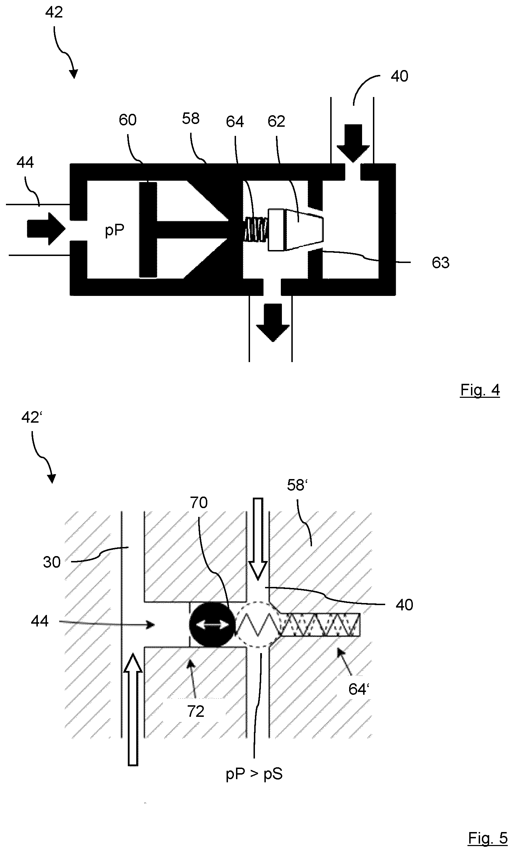

Im Zulaufzweig 30 ist zwischen der Pumpenanordnung 32 und dem Vordruckventil 38 eine Abzweigung vorgesehen, von der aus eine Pilotdruckleitung 44 zum pilotdruckgesteuerten Rücklaufventil 42 führt. Über die Pilotdruckleitung 44 wird ein Pilotdruck pP bereitgestellt. Das pilotdruckgesteuerte Rücklaufventil 42 ist so konfiguriert, dass es abhängig von dem jeweiligen Pilotdruck pP entweder gesperrt oder offen ist. Dabei ist das pilotdruckgesteuerte Rücklaufventil 42 derart konfiguriert, dass es bei einem Druck unterhalb eines Schaltpilotdrucks pS (siehe Fig. 5) offen ist. Das heißt, dass über den Rücklaufzweig 40 in diesem Zustand Hydraulikflüssigkeit 36 in den Tank 34 ablaufen kann. Bei und oberhalb des Schaltpilotdrucks pS wird das Rücklaufventil 42 mittels der Pilotdruckleitung 44 in einen gesperrten Zustand geschaltet, sodass der Rücklaufzweig 40 geschlossen ist und keine Hydraulikflüssigkeit 36 mehr in den Tank 34 ablaufen kann.

Der Schaltdruck des Vordruckventils 38 liegt oberhalb des Schaltpilotdrucks pS, sodass das Vordruckventil 38 erst dann aufgeht, wenn der Druck hoch genug ist, um das pilotdruckgesteuerte Rücklaufventil 42 geschlossen zu halten.

Dadurch, dass der Zulaufzweig 30 durch das Vordruckventil 38 gesperrt ist, bevor ein ausreichender Druck erzeugt wird, kann mithilfe der Pumpenanordnung 32 zunächst zumindest der Schaltpilotdruck pS aufgebaut und bereitgestellt werden, mithilfe dessen zunächst das pilotdruckgesteuerte Rücklaufventil 42 geschlossen wird. Bei dem folgenden weiteren Druckanstieg öffnet das Vordruckventil 38 und es kann Hydraulikflüssigkeit 36 über den Zulaufzweig 30 zu den Aktuatoren 18.1 und oder 18.2 befördert werden. In diesem Zustand bleibt der Druck am Rücklaufventil 42 höher als der Schaltpilotdruck pS. Dementsprechend bleibt das pilotdruckgesteuerte Rücklaufventil 42 geschlossen, sodass es beim Befüllen der Fluidkammern 20.1, 20.2 mit Hydraulikflüssigkeit 36 zu keinen großen Druckverlust an dieser Stelle kommen kann.

Die Pumpenanordnung 32 bleibt so lange aktiviert, bis die entsprechenden Fahrwerksniveaus an den Rädern 10.1, 10.2 erreicht sind. Sobald dies der Fall ist, schließen die Magnetventile 22.1 und 22.2 und die Volumina der entsprechenden Fluidkammern 20.1 und 20.2 sind definiert.

Um nach dem Betätigen der Pumpenanordnung 32 einen durch das Pumpen der Hydraulikflüssigkeit 36 aufgebauten Überdruck im Zulaufzweig 30 auszugleichen, ist ein Bypass 46 vorgesehen, über den der entsprechende Überdruck zwischen Pumpenanordnung 32 und den Aktuatoren 18.1 und 18.2 abgelassen werden kann. Sodann sinkt der Pilotdruck pP unter den Schaltpilotdruck pS und das pilotdruckgesteuerte Rücklaufventil 42 geht in den geöffneten Zustand über.

Um das Niveau an der Achse 4 zu senken, werden die Magnetventile 22.1 und 22.2 geöffnet, sodass die Hydraulikflüssigkeit 36 aus den jeweiligen Fluidkammern 20.1 und 20.2 abfließen kann und in den Tank 34 geleitet werden kann. Ist das gewünschte Niveau erreicht, werden die jeweiligen Magnetventile 22.1, 22.2 geschlossen. Dies kann, wie beim Anheben des Niveaus, durch die Magnetventile 22.1, 22.2 individuell pro Rad 10.1, 10.2 gesteuert werden. Sollte das Niveau an einem der Räder 10.1, 10.2 stärker oder weniger stark angehoben oder gesenkt werden, bleibt das entsprechende Magnetventil entsprechend länger oder weniger lang geöffnet.

Zur Verhinderung von Beschädigungen ist zwischen Zulaufzweig 30 und Rücklaufzweig 40 eine Überdrucksicherung in Form einer Überdruckleitung 48 und einem Überdruckventil 50 vorgesehen. Das Überdruckventil 50 öffnet bei einer Drucksituation, die außerhalb der üblichen Betriebsparameter der hydraulischen Höhenverstellung 12 liegt, aber noch unterhalb möglicher Berstgrenzen der entsprechenden Leitungen, Ventile und Aktuatoren. Dieses ist insbesondere für Aktuatoren mit elastomeren Bälgen und mindestens einer Rollfalte wichtig, da diese verhältnismäßig geringe Berstdrücke aufweisen. So kann eine Beschädigung der entsprechenden hydraulischen Höhenverstellung 12 verhindert werden.

Fig. 3 zeigt ein Schaltbild der hydraulischen Höhenverstellung aus Fig. 1 für ein Zweiachssystem. Zur Vermeidung von Wiederholungen wird auf die entsprechende Beschreibung der hydraulischen Höhenverstellung 12' aus Fig. 2 verwiesen.

Die Aktuatoren 18.3 und 18.4 an der Vorderachse 6 sind jeweils wie die Aktuatoren 18.1 und 18.2 an der Hinterachse 4 ausgebildet, weswegen auf eine detaillierte Beschreibung verzichtet wird und stattdessen auf die entsprechende Prinzipbeschreibung aus Fig. 2 verwiesen wird. Die Dimensionierung der Aktuatoren 18.1, 18.2 einerseits und 18.3, 18.4 andererseits kann jedoch in der Praxis unterschiedlich ausfallen, um unterschiedlichen Hub- und Belastungsanforderungen Rechnung zu tragen, zum Beispiel bei Nutzfahrzeugen mit hoher Zuladung auf einer der Achsen 4, 6.

Im Unterschied zu Fig. 2 ist vorliegend nur eine Kreuzung 26.1 vorgesehen, an der Zulaufzweig 30 und Rücklaufzweig 40 ineinander übergehen.

Durch selektives Sperren der entsprechenden Magnetventile 22.1 bis 22.4 oder Öffnen derselben können jeweils die Niveaus an einzelnen Rädern 10.1 bis 10.4 verändert, z. B. angehoben oder gesenkt werden.

Des Weiteren ist ein Druckpuffer 52 vorgesehen, der dazu dient, Druckspitzen im hydraulischen System beim Schalten zu vermeiden. Eine solche Druckspitze kann beispielsweise dann entstehen, wenn das Vordruckventil 38 oder das pilotdruckgesteuerte Rücklaufventil 42 schaltet. Ein entsprechender Druckpuffer kann auch bei der hydraulischen Höhenverstellung 12' aus Fig. 2 vorgesehen sein.

Bei der hydraulischen Höhenverstellung 12 ist keine separate Überdrucksicherung dargestellt. Diese kann in verschiedenen Ausführungsvarianten jedoch entsprechend ergänzt oder ohne weiteres in verschiedener anderer Form ausgestaltet sein, beispielsweise an der Pumpe 32.2 oder dem pilotdruckgesteuerten Rücklaufventil 42.

Fig. 4 zeigt ein pilotdruckgesteuertes Rücklaufventil 42 in einer ersten Ausführungsform.

Das pilotdruckgesteuerte Rücklaufventil 42 weist ein Gehäuse 58 auf, in dem ein Ventilstößel 60 axial beweglich angeordnet ist. Der Ventilstößel 60 bewegt einen mit ihm verbundenen Ventilkörper 62, der zusammen mit einem Ventilsitz 63 eine Öffnung oder ein Verschließen des Rücklaufzweigs 40 ermöglicht.

Der Ventilstößel 60 ist entgegen der Schließrichtung von einer Zugfeder 64 vorgespannt, sodass bei ausbleibendem Pilotdruck pP das entsprechende pilotdruckgesteuerte Rücklaufventil 42 geöffnet ist. Erst wenn der Pilotdruck PP den Schaltpilotdruck PS erreicht, wird die Zugfeder 64 ausreichend gedehnt und der Ventilkörper 62 legt sich dichtend in den Ventilsitz 63, wodurch der Rücklaufzweig 40 geschlossen wird.

In alternativen Ausführungsformen kann statt einer Zugfeder 64 eine Druckfeder angeordnet sein, die in die entgegengesetzte Richtung wirkt und den Ventilstößel 60 und den entsprechenden Ventilkörper 62 in die Offenstellung vorspannt.

Fig. 5 zeigt ein pilotdruckgesteuertes Rücklaufventil 42' in einer zweiten Ausführungsform.

Das pilotdruckgesteuerte Rücklaufventil 42' ist stärker integriert als das pilotdruckgesteuerte Rücklaufventil 42 aus Fig. 4. So sind der Zulaufzweig 30 und der Rücklaufzweig 40 jeweils durch ein entsprechendes Gehäuse 58' des pilotdruckgesteuerten Rücklaufventils 42' geführt. Auch die Pilotdruckleitung 44 ist in das Gehäuse 58' integriert. Das Gehäuse 58' kann gegossen sein.

Als Ventilkörper wird eine Ventilkugel 70 verwendet, die mithilfe einer Druckfeder 64' bei geringen Pilotdrücken pP gegen einen Anschlag 72 gedrückt wird. Erst wenn der Pilotdruck pP größer wird als der Schaltpilotdruck pS, wird die Feder 64' ausreichend komprimiert, sodass der Rücklaufzweig 40 durch die Ventilkugel 70 gesperrt wird. Sinkt der Pilotdruck pP wieder ab, gibt die Ventilkugel 70 den Rücklaufzweig 40 wieder frei.

In dieser Ausführungsform kann auch ein Bypass integriert werden, beispielsweise in Form einer Nut, die separat oder zwischen der Pilotdruckleitung 44 und dem Rücklaufzweig 40 gebildet ist.

Alternativ können in dieser und in der in Fig. 4 beschriebenen Ausführungsform eine Nut in dem entsprechenden Ventilkörper 62; 70 ausgebildet sein, um eine perfekte Abdichtung am jeweiligen Ventilsitz 63 zu verhindern.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 2: Kraftfahrzeug
- 4: Hinterachse
- 6: Vorderachse
- 8.1 - 8.4: Fahrwerksanordnung
- 10.1 - 10.4: Rad
- 12, 12': Hydraulische Höhenverstellung
- 14: Steueranordnung
- 16.1 - 16.4: Zuleitung
- 18.1 - 18.4: Aktuator
- 20.1 - 20.4: Fluidkammer
- 22.1 - 22.4: Magnetventil
- 24.1 - 24.4: Niveausensor
- 26, 26.1: Verteiler
- 30: Zulaufzweig
- 32: Pumpenanordnung
- 32.1: Motor
- 32.2: Pumpe
- 34: Tank
- 36: Hydraulikflüssigkeit
- 38: Vordruckventil
- 40: Rücklaufzweig
- 42, 42': Pilotdruckgesteuertes Rücklaufventil
- 44: Pilotdruckleitung
- 46: Bypass
- 48: Überdruckleitung
- 50: Überdruckventil
- 52: Druckpuffer
- 58, 58': Gehäuse
- 60: Ventilstößel
- 62: Ventilkörper
- 63: Ventilsitz
- 64, 64': Feder
- 70: Ventilkugel
- 72: Anschlag
- pP: Pilotdruck
- pS: Schaltpilotdruck

## Patentansprüche

1. Hydraulische Höhenverstellung (12, 12') eines Kraftfahrzeugs (2), mit wenigstens einer hydraulischen Pumpenanordnung (32), die über einen Zulaufzweig (30) mit wenigstens zwei Aktuatoren (18.1, 18.2, 18.3, 18.4) zur Verstellung eines Fahrzeugniveaus des Kraftfahrzeugs (2) verbunden ist, indem mittels der Pumpenanordnung (32) ein Hydraulikflüssigkeit (36) von wenigstens einer Tankanordnung (34) in wenigstens einen der wenigstens zwei Aktuatoren (18.1, 18.2, 18.3, 18.4) pumpbar ist, wobei den Aktuatoren (18.1, 18.2, 18.3, 18.4) jeweils wenigstens ein Schaltventil (22.1, 22.2, 22.3, 22.4) vorgeschaltet ist, um einen Zufluss oder Abfluss von Hydraulikflüssigkeit (36) zuzulassen oder zu unterbinden, wobei die wenigstens zwei Aktuatoren (18.1, 18.2, 18.3, 18.4) über einen Rücklaufzweig (40) mit der wenigstens einen Tankanordnung (34) verbunden sind, wobei ein pilotdruckgesteuertes Rücklaufventil (42; 42') vorgesehen ist, das derart ausgebildet ist, dass es unterhalb eines definierten Schaltpilotdrucks (pS) den Rücklaufzweig (40) offen hält, wobei das Rücklaufventil (42; 42') bei oder oberhalb des Schaltpilotdrucks (pS) den Rücklaufzweig (40) verschlossen hält, wobei zwischen Pumpenanordnung (32) und Rücklaufventil (42; 42') eine Pilotdruckleitung (44) vorgesehen ist, über die ein Pilotdruck (pP) bereitstellbar ist.

2. Hydraulische Höhenverstellung (12, 12') nach Anspruch 1, wobei ein Druckpuffer (52) vorgesehen ist, der Druckspitzen bei Druckveränderungen im Zulaufzweig (30) des hydraulischen Systems reduziert.

3. Hydraulische Höhenverstellung (12, 12') nach Anspruch 1 oder 2, wobei den wenigstens zwei Aktuatoren (18.1, 18.2, 18.3, 18.4) im Zulaufzweig (30) ein Vordruckventil (38) vorgeschaltet ist, das erst oberhalb eines Mindestdrucks einen Fluidfluss zu den wenigstens zwei Aktuatoren (18.1, 18.2, 18.3, 18.4) freigibt, wobei die Pilotdruckleitung (44) zwischen Pumpenanordnung (32) und Vordruckventil (38) einerseits und dem Rücklaufventil (42; 42') andererseits angeordnet ist.

4. Hydraulische Höhenverstellung (12, 12') nach einem der vorangegangenen Ansprüche, wobei ein Bypass (46) zum Druckabbau nach Abschalten der wenigstens einen Pumpenanordnung (32) vorgesehen ist.

5. Hydraulische Höhenverstellung (12, 12') nach Anspruch 4, wobei der Bypass (46) im Rücklaufventil (42; 42') ausgebildet ist und eine Fluidverbindung zwischen Pilotdruckleitung (44) und Rücklaufzweig (40) herstellt.

6. Hydraulische Höhenverstellung (12, 12') nach Anspruch 5, wobei der Bypass (46) als Nut oder Bohrung im Ventilkörper (62; 70) ausgebildet ist.

7. Hydraulische Höhenverstellung (12, 12') nach einem der Ansprüche 4 bis 6, wobei der Bypass (46) im Zulaufzweig (30) zwischen der Pumpenanordnung (32) und dem Vordruckventil (38) einerseits und dem Rücklaufzweig (40) zwischen dem Rückflussventil (42) und der Tankanordnung (34) andererseits eine Fluidverbindung herstellt.

8. Hydraulische Höhenverstellung (12, 12') nach einem der vorangegangenen Ansprüche, wobei das Rücklaufventil (42; 42') einen mit einer Feder (64; 64') belasteten Ventilkörper (62; 70) aufweist, der durch die Feder (64; 64') in einer Offenstellung gehalten wird, wobei der Ventilkörper (62; 70) durch den Schaltdruck (pS) in eine Geschlossenstellung gebracht wird.

9. Hydraulische Höhenverstellung (12, 12') nach Anspruch 8, wobei der Ventilkörper eine Ventilkugel (60), ein Ventilstößel (60, 62) oder ein Ventilzylinder ist.

10. Hydraulische Höhenverstellung (12, 12') nach einem der vorangegangenen Ansprüche, wobei zwischen Pumpenanordnung (32) und Rücklaufzweig (40) eine durch ein Überdruckventil (50) im Normalbetrieb gesperrte Überdruckleitung (48) vorgesehen ist.

11. Hydraulische Höhenverstellung (12, 12') nach einem der vorangegangenen Ansprüche, wobei die mindestens zwei Aktuatoren (18.1, 18.2, 18.3, 18.4) jeweils mindestens eine Fluidkammer (20.1, 20.2, 20.3, 20.4) enthalten, welche von jeweils mindestens einem Elastomerbalg mit einer Rollfalte zumindest abschnittsweise begrenzt wird, wobei das hydraulische System so konfiguriert ist, dass der gesamte Fluidstrom an Hydraulikflüssigkeit (36) beim Einfahren einer oder mehrerer der wenigstens zwei Aktuatoren (18.1, 18.2, 18.3, 18.4) gemeinsam durch das eine Rücklaufventil (42; 42') in den Rücklaufzweig (40) strömt.

12. Kraftfahrzeug (2) mit einer hydraulischen Höhenverstellung (12, 12') nach einem der vorangegangenen Ansprüche.
